# EUROPEAN PATENT APPLICATION

(11) **EP 4 806 965 A1**
(43) Date of publication of application: **16.09.2026**
(21) Application number: 24912930.5
(22) Date of filing: 25.12.2024
(51) Int. Cl.: C09D 179/08, C09D 5/03

(54) **METHOD FOR MANUFACTURING CONDUCTIVE MEMBER, AND CONDUCTIVE MEMBER**

(30) Priority: 26.12.2023 JP 2023219957
(71) Applicant: Mitsui Chemicals, Inc., Tokyo 104-0028 (JP)
(72) Inventor: TSUGANE, Yasuhito, Tokyo 104-0028 (JP); WASHIO, Isao, Tokyo 104-0028 (JP)
(74) Representative: Hoffmann Eitle
(86) International application number: PCT/JP2024/045970
(87) International publication number: WO 2025/143044

(57) **Abstract**

A method of producing a conductive member includes attaching a powder including a thermoplastic polyimide containing a structural unit represented by Formula (1), to a surface of a metal member by an electrostatic coating method, and heating the attached powder, thereby melting the powder to form an insulating film, in which an IR spectrum of the insulating film satisfies at least one of a ratio I₁₄₈₇/I₁₇₇₈ of an absorption intensity I₁₄₈₇ at 1487 cm⁻¹ to an absorption intensity I₁₇₇₈ at 1778 cm⁻¹ being from 3.0 to 5.0, or a ratio I₁₂₃₂/I₁₇₇₈ of an absorption intensity I₁₂₃₂ at 1232 cm⁻¹ to the absorption intensity I₁₇₇₈ at 1778 cm⁻¹ being from 3.0 to 5.0.

## Description

### Technical Field

The present disclosure relates to a method of producing a conductive member, and a conductive member.

### Background Art

Polyimides are generally excellent in heat resistance and excellent in insulating properties at high temperatures. Therefore, polyimides are studied as materials for forming insulating layers of conductive members such as bus-bars.

For example, Patent Document 1 discloses a film having heat resistance, weather resistance, and corrosion resistance which is formed by attaching powdery paint of a thermoplastic polyimide polymer to a pipe according to a fluidized immersion method. It is necessary for the fluidized immersion method to strictly manage the particle shape and the particle size of the powdery paint.

Patent Document 1: Japanese Patent Application Laid-Open (JP-A) No. H04-339880

### SUMMARY OF INVENTION

### Technical Problem

Not only the fluidized immersion method, but also an electrostatic coating method is known as a method of forming a film with powdery paint. The electrostatic coating method is a method in which charged powder particles are sprayed to a desired substrate, thereby causing the powder to attach to the substrate. After the powder is attached to form a powder layer on the substrate, the particles included in the powder layer is melted by heating, whereby the powder layer is smoothed and a film (also referred to as coating film) is formed. The electrostatic coating method can enable a thin film having high thickness uniformity is formed on a substrate having a complicated shape such as a bent shape or a shape of which thickness or width is not even.

However, a conventional common electrostatic coating method involves spraying a powder to a substrate and then heating (namely, annealing) a powder layer at a somewhat high temperature over time in order to smoothen the powder layer or make the powder layer uniform. Therefore, there have been cases in which a film having desired physical properties is not always obtained by heating, depending on the component of the powder.

The present disclosure has been made in view of the above, and the disclosure relates to provision of a method of producing a conductive member in which reduction in dielectric breakdown voltage is mitigated.

### Solution to Problem

Specific means for solving the problem include the following:
<1> A method of producing a conductive member, the method including:
   attaching a powder including a thermoplastic polyimide including a structural unit represented by the following Formula (1), to a surface of a metal member by an electrostatic coating method; and
   heating the attached powder, thereby melting the powder to form an insulating film,
   wherein an IR spectrum of the insulating film satisfies at least one of a ratio I₁₄₈₇/I₁₇₇₈ of an absorption intensity I₁₄₈₇ at 1487 cm⁻¹ to an absorption intensity I₁₇₇₈ at 1778 cm⁻¹ being from 3.0 to 5.0, or a ratio I₁₂₃₂/I₁₇₇₈ of an absorption intensity I₁₂₃₂ at 1232 cm⁻¹ to the absorption intensity I₁₇₇₈ at 1778 cm⁻¹ being from 3.0 to 5.0: 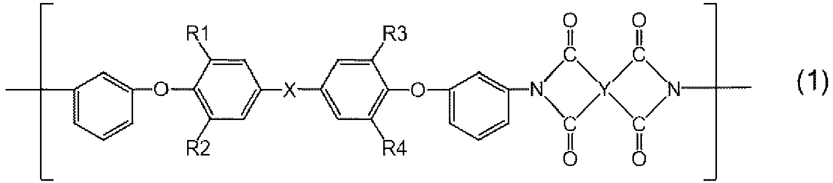 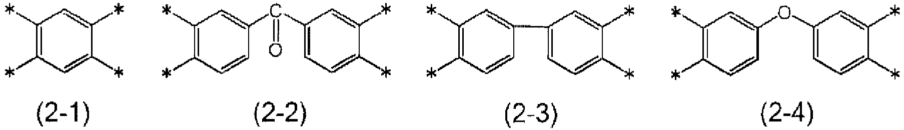
   wherein, in Formula (1), X is a direct bond, -SO₂-, -CO-, -C(CH₃)₂-, -C(CF₃)₂-, or - S-; and each of R1, R2, R3, and R4 is independently a hydrogen atom, an alkyl group, an alkoxy group, an alkyl halide group, an alkoxy halide group, or a halogen atom, and
   wherein, in Formula (1), Y is a group represented by any one of Formula (2-1) to Formula (2-4); and, in Formula (2-1) to Formula (2-4), * represents a bond, and aromatic rings optionally have a substituent.
<2> The method of producing a conductive member according to <1>, wherein the temperature of the heating is 390°C to 430°C.
<3> The method of producing a conductive member according to <1> or <2>, wherein duration of the heating is from more than 0 minute to 30 minutes.
<4> The method of producing a conductive member according to any one of <1> to <3>, wherein the powder satisfies at least one of a particle size d50, at which the cumulative volume-based particle size distribution is 50%, being from 5 µm to 100 µm, or a particle size d90, at which the cumulative volume-based particle size distribution is 90%, being from 10 µm to 200 µm.
<5> The method of producing a conductive member according to any one of <1> to <4>, wherein the material of the metal member is a metal that is any one of copper, a copper alloy, iron, an iron alloy containing steel, aluminum, or an aluminum alloy.
<6> The method of producing a conductive member according to any one of <1> to <5>, wherein the metal member is a surface-treated metal member.
<7> The method of producing a conductive member according to any one of <1> to <6>, wherein the thickness of the insulating film is from 5 µm to 1000 µm.
<8> A conductive member including a metal member and an insulating film covering at least a part of a surface of the metal member,
   wherein the insulating film includes a thermoplastic polyimide including a structural unit represented by the following Formula (1), and the IR spectrum thereof satisfies at least one of a ratio I₁₄₈₇/I₁₇₇₈ of an absorption intensity I₁₄₈₇ at 1487 cm⁻¹ to an absorption intensity I₁₇₇₈ at 1778 cm⁻¹ being from 3.0 to 5.0, or a ratio I₁₂₃₂/I₁₇₇₈ of an absorption intensity I₁₂₃₂ at 1232 cm⁻¹ to the absorption intensity I₁₇₇₈ at 1778 cm⁻¹ being from 3.0 to 5.0: 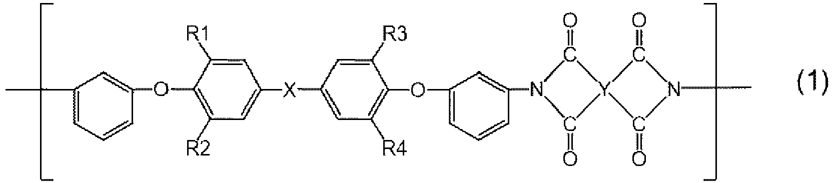 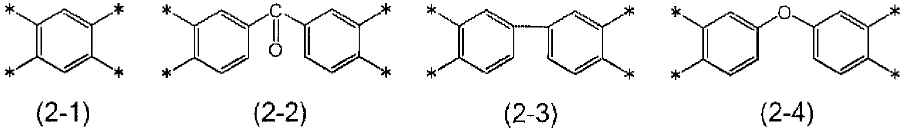
   wherein, in Formula (1), X is a direct bond, -SO₂-, -CO-, -C(CH₃)₂-, -C(CF₃)₂-, or - S-; and each of R1, R2, R3, and R4 is independently a hydrogen atom, an alkyl group, an alkoxy group, an alkyl halide group, an alkoxy halide group, or a halogen atom, and
   in Formula (1), Y is a group represented by any one of Formula (2-1) to Formula (2-4), and, in Formula (2-1) to Formula (2-4), * represents a bond, and the aromatic ring optionally has a substituent.
<9> The conductive member according to <8>, wherein the material of the metal member is any one of metal of copper, a copper alloy, aluminum, or an aluminum alloy.
<10> The conductive member according to <8>, wherein the material of the metal member is copper or a copper alloy.
<11> The conductive member according to any one of <8> to <10>, wherein, in a case in which a cross cut test according to ISO 2409:1992 is performed, the proportion of the number of cells with no peeling of the insulating film from the metal member is 80% or more with respect to the total number of cells.

### Advantageous Effect of Invention

According to the disclosure, a method of producing a conductive member inhibited from being reduced in dielectric breakdown voltage and a conductive member produced by the production method are provided.

### DESCRIPTION OF EMBODIMENTS

Hereinafter, one embodiment of the disclosure is described in detail. However, the disclosure is not intended to be limited to the following embodiment. In the following disclosure, a constituent component (also encompassing an element step or the like) is not essential, unless particularly clearly indicated. The same also applies to a numerical value and a range thereof, and such numerical value and range thereof are not intended to limit the disclosure.

A numerical value range indicated with "(from) ... to ..." in the disclosure includes respective numerical values described before and after "to" as the lower limit value and the upper limit value.

For numerical value ranges described in a stepwise manner in the present disclosure, the upper limit value or the lower limit value of one numerical value range may be replaced with the upper limit value or the lower limit value of another numerical value range in the stepwise description. The upper limit value or the lower limit value of any numerical value range described in the present disclosure may also be replaced with a value described in Examples.

The content ratio of each component in a composition in the present disclosure means, in a case where plural substances corresponding to a component of interest are present in the composition, the content ratio of the total content of the plurality of substances in the composition unless particularly noted.

In a case in which plural elements are listed using "or" in the present disclosure, unless particularly clearly indicated, selection of a combination of the plural elements is not excluded as long as a technical conflict does not occur.

Even in a case in which an element is expressed in singular form in the present disclosure, unless particularly clearly indicated, the presence of plural such elements is not excluded as long as a technical conflict does not occur.

Plural exemplary aspects separately described in the present disclosure may be combined with each other to constitute a new aspect, as long as these exemplary aspects do not conflict with each other.

### <<Method of Producing Conductive Member>>

The method of producing an electrically conductive member of the disclosure includes:
attaching a powder including a thermoplastic polyimide containing a structural unit represented by the following Formula (1), to a surface of a metal member by an electrostatic coating method, and
heating the attached powder, thereby melting the powder to form an electrically insulating film, wherein
an IR spectrum of the insulating film satisfies at least one of a ratio I₁₄₈₇/I₁₇₇₈ of the absorption intensity I₁₄₈₇ at 1487 cm⁻¹ and the absorption intensity I₁₇₇₈ at 1778 cm⁻¹, of from 3.0 to 5.0, or a ratio I₁₂₃₂/I₁₇₇₈ of the absorption intensity I₁₂₃₂ at 1232 cm⁻¹ and the absorption intensity I₁₇₇₈ at 1778 cm⁻¹, of from 3.0 to 5.0.

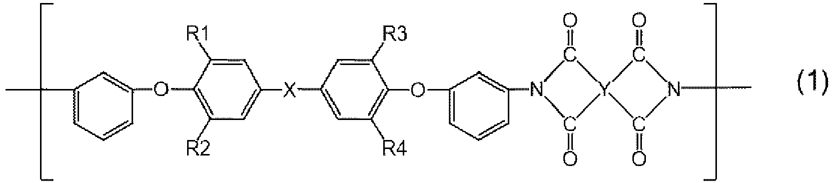

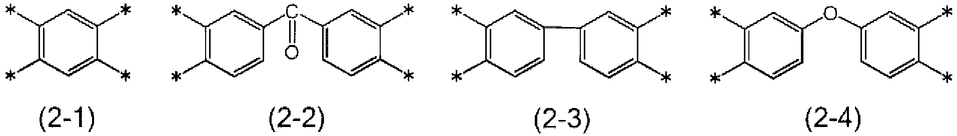

In Formula (1), X is a direct bond, -SO₂-, -CO-, -C(CH₃)₂-, -C(CF₃)₂-, or -S-. Each of R1, R2, R3, and R4 is independently a hydrogen atom, an alkyl group, an alkoxy group, an alkyl halide group, an alkoxy halide group, or a halogen atom.

In Formula (1), Y is a group represented by any one of Formula (2-1) to Formula (2-4). In Formula (2-1) to Formula (2-4), * represents a bond, and the aromatic rings optionally have a substituent.

According to the method of producing a conductive member of the disclosure, a method of producing a conductive member inhibited from being reduced in dielectric breakdown voltage is provided. The mechanism of action of the method of producing a conductive member of the disclosure, although not clear, is presumed as follows.

As described above, where an electrostatic coating method is used, a powder is sprayed onto a substrate and then heated at a relatively high temperature over time to be melted, thereby forming a smoothed film. However, depending on a component of the powder, the component of the powder has been altered by heating, resulting from decomposition or the like, as a result of which a film having desired physical properties is not obtained. Under such circumstances, the present inventors have found a new problem wherein, during a formation of an insulating film by an electrostatic coating method using a powder including a thermoplastic polyimide containing a structural unit represented by Formula (1), heating after electrostatic coating causes a reduction in dielectric breakdown voltage of the formed film, and the present inventors have discovered a method of producing a conductive member reduces the reduction in dielectric breakdown voltage.

Although electrostatic coating and subsequent heating are performed in the production method of a conductive member of the present disclosure, the heating is performed so that an IR spectrum of an insulating film satisfies at least one of: a ratio I₁₄₈₇/I₁₇₇₈ of the absorption intensity at 1487 cm⁻¹ and the absorption intensity at 1778 cm⁻¹ being from 3.0 to 5.0; or a ratio I₁₂₃₂/I₁₇₇₈ of the absorption intensity at 1232 cm⁻¹ and the absorption intensity at 1778 cm⁻¹ being from 3.0 to 5.0, whereby a reduction in dielectric breakdown voltage is mitigated.

In the IR spectrum, a peak at 1778 cm⁻¹ is a peak assigned to an imide group (O=C-N-C=O), a peak at 1487 cm⁻¹ is a peak assigned to a carbon-carbon double bond (C=C) in an aromatic ring, and a peak at 1232 cm⁻¹ is a peak assigned to an ether bond (-O-).

In a case in which the powder including the thermoplastic polyimide containing a structural unit represented by Formula (1) is heated, decomposition of the thermoplastic polyimide can occur depending on heating conditions such as the heating temperature and the heating time. Here, in the structural unit represented by Formula (1), typically, decomposition of an aromatic ring or cleavage of an ether bond easily occurs. In this regard, an imide group contained in the structural unit represented by Formula (1) has higher heat stability than an aromatic ring or an ether bond, and therefore is relatively less susceptible to decomposition or cleavage.

Accordingly, the above ratio I₁₄₈₇/I₁₇₇₈ can be said to be an indicator representing the degree of decomposition of an aromatic ring in the thermoplastic polyimide containing a structural unit represented by Formula (1). The ratio I₁₂₃₂/I₁₇₇₈ can be said to be an indicator representing the degree of cleavage of an ether bond in the thermoplastic polyimide containing a structural unit represented by Formula (1). In a case in which the IR spectrum of the insulating film satisfies at least one of a ratio I₁₄₈₇/I₁₇₇₈ being from 3.0 to 5.0 or a ratio I₁₂₃₂/I₁₇₇₈ being from 3.0 to 5.0, it is indicated that decomposition of an aromatic ring or cleavage of an ether bond is reduced in the thermoplastic polyimide containing a structural unit represented by Formula (1).

From the foregoing, a film being a melted product of the thermoplastic polyimide containing a structural unit represented by Formula (1) is inhibited from being reduced in dielectric breakdown voltage in the disclosure. It is noted that the disclosure is not limited by the above presumption mechanism.

### <Electrostatic Coating Method>

The method of producing a conductive member of the disclosure includes attaching a powder including the thermoplastic polyimide containing a structural unit represented by Formula (1), to a surface of a metal member by an electrostatic coating method. The electrostatic coating method in the disclosure is not particularly limited as long as the powder including the thermoplastic polyimide containing a structural unit represented by Formula (1) can be attached to the surface of a metal member.

### [Powder]

### (Thermoplastic Polyimide Containing Structural Unit Represented by Formula (1))

### -Structural Unit Represented by Formula (1)-

The powder in the disclosure includes a thermoplastic polyimide containing a structural unit represented by the following Formula (1). The powder in the disclosure preferably includes plural particles each including a thermoplastic polyimide containing a structural unit represented by the following Formula (1).

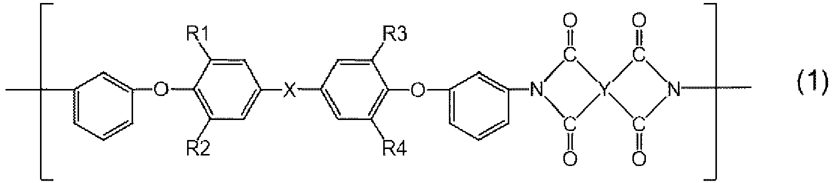

In Formula (1), X is a direct bond, -SO₂-, -CO-, -C(CH₃)₂-, -C(CF₃)₂-, or -S-.

X is preferably a direct bond, -C(CH₃)₂-, or -C(CF₃)₂-, more preferably a direct bond, in terms of inhibiting a reduction in dielectric breakdown voltage. Herein, the "direct bond" indicates that two aromatic rings adjacent to X are bound by a carbon-carbon single bond. In other words, X being a direct bond means that X does not exist.

In Formula (1), each of R1, R2, R3, and R4 is independently a hydrogen atom, an alkyl group, an alkoxy group, an alkyl halide group, an alkoxy halide group, or a halogen atom.

The alkyl group may be linear or branched. The number of carbon atoms in the alkyl group is preferably from 1 to 40, more preferably from 1 to 10. Examples of the alkyl group include a methyl group, an ethyl group, a n-propyl group, an isopropyl group, a n-butyl group, an isobutyl group, a tert-butyl group, a n-pentyl group, an isoamyl group, a 2-ethylbutyl group, and a n-hexyl group.

The alkoxy group may be linear or branched. Examples of the alkoxy group include a methoxy group, an ethoxy group, an n-propyloxy group, an isopropyloxy group, a n-butyloxy group, an isobutyloxy group, a tert-butyloxy group, a n-pentyloxy group, and a n-hexyloxy group.

The alkyl halide group is preferably a group in which a hydrogen atom in the alkyl group is substituted with a fluorine atom, a chlorine atom, a bromine atom, or an iodine atom. Examples of the alkyl halide group include a fluoromethyl group and a trifluoromethyl group.

The alkoxy halide group is preferably a group in which a hydrogen atom in the alkoxy group is substituted with a fluorine atom, a chlorine atom, a bromine atom, or an iodine atom. Examples of the alkoxy halide group include a fluoromethoxy group.

Examples of the halogen atom include a fluorine atom, a chlorine atom, a bromine atom, and an iodine atom.

Each of R1, R2, R3, and R4 is independently preferably a hydrogen atom or a methyl group, more preferably a hydrogen atom in terms of inhibiting a reduction in dielectric breakdown voltage. Each of R1, R2, R3, and R4 may be the same as or different from each other, and are preferably the same in view of the ease of synthesis.

In Formula (1), Y is a group represented by any of the following Formula (2-1) to Formula (2-4). In the following Formula (2-1) to Formula (2-4), * represents a bond and the aromatic rings optionally have a substituent.

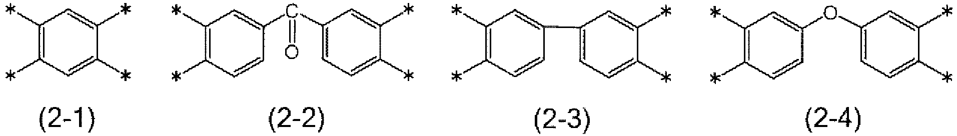

Y is preferably represented by Formula (2-1) or Formula (2-3), more preferably represented by Formula (2-1), in terms of inhibiting a reduction in dielectric breakdown voltage.

In a case in which Y in Formula (1) is a group represented by Formula (2-1) among Formula (2-1) to Formula (2-4), the melting point of the thermoplastic polyimide tends to be the highest. Therefore, in a case in which Y is the group represented by Formula (2-1), the heating temperature necessary for film formation tends to be the highest, and accordingly it can be said that decomposition easily occurs during film formation by melting with heating. Accordingly, it can be said that, as long as reduction in dielectric breakdown voltage of an insulating film of a conductive member produced with a thermoplastic polyimide in which the group represented by Formula (2-1) is used is mitigated, a reduction in dielectric breakdown voltage is also sufficiently mitigated in a case of a thermoplastic polyimide in which each group represented by Formula (2-2) to Formula (2-4) is used.

The substituent optionally contained in an aromatic ring in Formula (2-1) to Formula (2-4) is preferably a hydrogen atom, an alkyl group, an alkoxy group, an alkyl halide group, an alkoxy halide group, or a halogen atom. In a case in which an aromatic ring in Formula (2-1) to Formula (2-4) has plural substituents, these substituents may be the same as or different from each other.

In the disclosure, the "thermoplastic polyimide" represents a polyimide having thermoplasticity. The thermoplastic polyimide is preferably a polyimide having a deflection temperature under load of 200°C or more.

Examples of the thermoplastic polyimide containing a structural unit represented by Formula (1) include a thermoplastic polyimide containing a structural unit represented by the following Formula (3), a thermoplastic polyimide copolymer containing structural units represented by the following Formula (4) and the following Formula (5), and a thermoplastic polyimide copolymer containing structural units represented by the following Formula (6) and the following Formula (7).

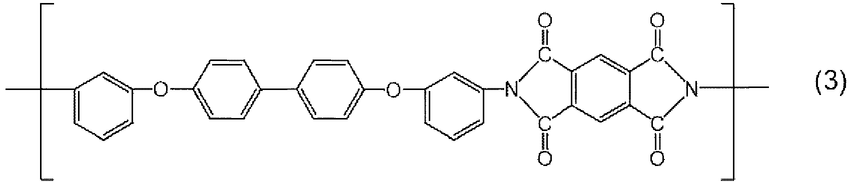

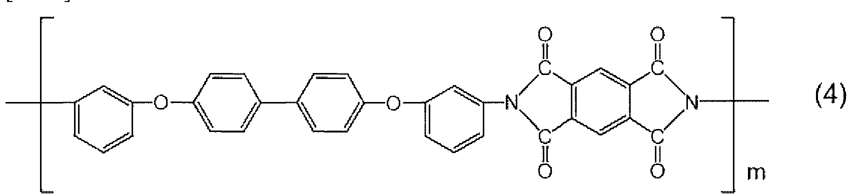

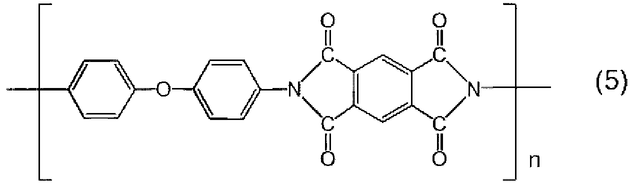

In the formulae, m in Formula (4) and n in Formula (5) represent the copolymerization ratio in the thermoplastic polyimide copolymer, and the m/n (% by mol/% by mol) is preferably from 4 to 99, more preferably from 5 to 50, still more preferably from 6 to 20, particularly preferably from 7 to 15, and most preferably 9.

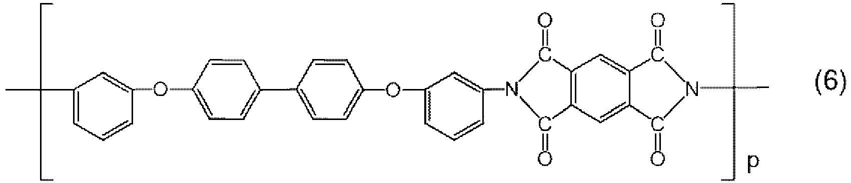

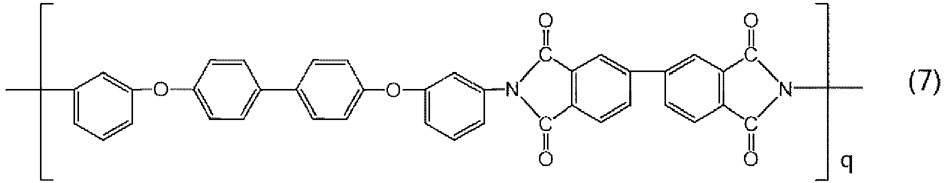

In the formulae, p in Formula (6) and q in Formula (7) represent the copolymerization ratio in the thermoplastic polyimide copolymer, and the p/q (% by mol/% by mol) is preferably from 0.01 to 100, more preferably from 0.1 to 50, still more preferably from 0.3 to 10, particularly preferably from 0.5 to 3, and most preferably 1.

The thermoplastic polyimide containing a structural unit represented by Formula (1) is preferably a thermoplastic polyimide resin composed of structural units represented by Formula (1). A film formed from the thermoplastic polyimide containing a structural unit represented by Formula (1) has improved electrical characteristics and heat resistance.

The thermoplastic polyimide containing a structural unit represented by Formula (1) is preferably a thermoplastic polyimide containing a structural unit represented by Formula (3), still more preferably a thermoplastic polyimide composed of structural units represented by Formula (3). A film formed from the thermoplastic polyimide containing a structural unit represented by Formula (3) has improved electrical characteristics and heat resistance.

The thermoplastic polyimide containing a structural unit represented by Formula (1) is also preferably a thermoplastic polyimide copolymer containing structural units represented by Formula (4) and Formula (5), also still more preferably a thermoplastic polyimide composed of structural units represented by Formula (4) and Formula (5).

The thermoplastic polyimide containing a structural unit represented by Formula (1) is also preferably a thermoplastic polyimide copolymer containing structural units represented by Formula (6) and Formula (7), also still more preferably a thermoplastic polyimide composed of structural units represented by Formula (6) and Formula (7).

The thermoplastic polyimide containing a structural unit represented by Formula (1) may contain from one to ten types, from one to five types, from one to two types, or only one type of structural unit represented by Formula (1).

### -Structural Unit Other Than That Represented By Formula (1)-

The thermoplastic polyimide containing a structural unit represented by Formula (1) may be a thermoplastic polyimide copolymer composed of a structural unit represented by Formula (1) and a structural unit other than that represented by Formula (1).

The structural unit other than that represented by Formula (1) may be, for example, a structural unit derived from an aromatic hydrocarbon optionally having a substituent, or a structural unit derived from an aliphatic hydrocarbon optionally having a substituent. Examples of the substituent include a halogen atom, a carboxy group, a carbonyl group, an alkoxy group, an amino group, an amide group, an epoxy group, a (meth)acryloyl group, a vinyl group, and a sulfo group. Plural substituents may be contained. In a case in which plural substituents are contained, the substituents may be the same as or different from each other.

### -Number Average Molecular Weight of Thermoplastic Polyimide-

The number average molecular weight of the thermoplastic polyimide containing a structural unit represented by Formula (1) is preferably from 3000 to 100000, more preferably from 4000 to 70000, and still more preferably from 5000 to 40000. In the disclosure, the number average molecular weight is measured by GPC (gel permeation chromatography).

In the disclosure, the number average molecular weight can be measured by use of gel permeation chromatograph GPC. Specifically, 1.5 mL of 4-chlorophenol was added to 5 mg of a sample, and mildly stirred at from 130 to 140°C. The resulting solution was air-cooled to room temperature, and then 3.5 mL of chloroform was added thereto. Thereafter, filtration with a 0.2-µm filter was performed to prepare a sample solution. The sample solution prepared was used to perform measurement in the following conditions.
Detector: differential refractometer detector RI (RI-8020 manufactured by Tosoh Corporation)
Column: TSKgel GMHXL × 2, G2500HXL × 1 (7.8 mm I.D. × 300 mm, manufactured by Tosoh Corporation)
Column temperature: 23°C
Solvent: 4-chlorophenol/chloroform (3/7) (volume/volume)
Flow rate: 0.8 mL/min, sample concentration: 1 mg/ml, amount of injection: 0.3 mL
Standard sample: monodisperse polystyrene manufactured by Tosoh Corporation

### -Melt Index of Thermoplastic Polyimide-

The melt index (hereinafter, also referred to as "MI") of the thermoplastic polyimide containing a structural unit represented by Formula (1) is not particularly limited, and is preferably 2 g/10 min to 30 g/10 min, more preferably 4 g/10 min to 20 g/10 min. In the disclosure, the MI can be measured with a melt indexer (model number: A-371401705, manufactured by Toyo Seiki Seisaku-sho, Ltd.). Specifically, the MI can be measured at a cylinder temperature of 400°C in a load condition of 1.05 kg, according to JIS K7210 (ISO 1133). The unit of the MI is g/10 min.

### -Logarithmic Viscosity of Thermoplastic Polyimide-

The logarithmic viscosity of the thermoplastic polyimide containing a structural unit represented by Formula (1) is not particularly limited, and is preferably from 0.1 dl/g to 3.0 dl/g, more preferably from 0.2 dl/g to 2.0 dl/g, still more preferably from 0.3 dl/g to 1.5 dl/g, and particularly preferably from 0.4 dl/g to 1.0 dl/g. In a case in which the logarithmic viscosity is from 0.1 dl/g to 3.0 dl/g, the molecular weight of the thermoplastic polyimide is more favorable, and the thermoplastic polyimide has excellent fluidity, whereby a smoother film is easily formed, and the formed film has more improved mechanical strength.

The logarithmic viscosity is measured at a concentration of 0.5 g/100 ml in a mixed solvent of p-chlorophenol/phenol (weight ratio 90/10), after the solution is heated to 200°C and then cooled to 35°C. The definition of the logarithmic viscosity is described in P 58 of "Polymer Handbook" 1995, first version, published by Asakura Publishing Co., Ltd., edited by The Japan Society for Analytical Chemistry.

### -Glass Transition Temperature Tg of Thermoplastic Polyimide-

The lower limit of the glass transition temperature Tg of the thermoplastic polyimide containing a structural unit represented by Formula (1) is not particularly limited, and is preferably 200°C or more, more preferably 210°C or more, and still more preferably 220°C or more, from the viewpoint of heat resistance. The upper limit of the glass transition temperature Tg is not particularly limited, and is preferably 300°C or less, more preferably 290°C or less, and still more preferably 280°C or less. The upper limit of the glass transition temperature Tg may be 270°C or less, may be 260°C or less, may be 250°C or less, or may be 240°C or less.

In the disclosure, the glass transition temperature Tg can be measured with a differential scanning calorimeter (DSC220C model, manufactured by Seiko Instruments Inc.). Specifically, about 5 mg of a material is sealed in an aluminum pan, and set in a differential scanning calorimeter. Subsequently, heating is performed from room temperature to 450°C at a rate of 10°C/min. For complete melting of a substance for measurement, the material is maintained at 450°C for 5 minutes, and then cooling is performed to 30°C at a rate of 10°C/min. After being held at 30°C for 5 minutes, second heating is performed up to 450°C at 10°C/min. The inflection point corresponding to glass transition is defined as the glass transition temperature (Tg).

### -Melting Point of Thermoplastic Polyimide-

The lower limit of the melting point of the thermoplastic polyimide containing a structural unit represented by Formula (1) is not particularly limited, and is preferably 340°C or more, more preferably 350°C or more, still more preferably 360°C or more, further preferably 370°C or more, still further preferably 380°C or more, and even further preferably 385°C or more, from the viewpoint of heat resistance. The upper limit of the melting point of the thermoplastic polyimide resin is not particularly limited, and is preferably 430°C or less, more preferably 420°C or less, still more preferably 410°C or less, further preferably 400°C or less, still further preferably 395°C or less, and even further preferably 390°C or less, from the viewpoint of molding processability.

In the disclosure, the melting point can be measured with a DSC (Differential Scanning Calorimeter, DT-40 series, "DSC-41M" manufactured by Shimadzu Corporation).

### -Method of Obtaining Thermoplastic Polyimide-

### {Synthesis}

The thermoplastic polyimide containing a structural unit represented by Formula (1) can be synthesized by allowing an aromatic diamine compound (for example, a compound represented by the following Formula (8)) and an aromatic tetracarboxylic dianhydride (for example, a compound represented by the following Formula (9)) as raw materials to react in the presence or absence of an organic solvent, and imidizing the resulting polyamide acid. In production, conditions used in a known method of producing polyimide can be utilized. At least one of the aromatic diamine compound or the aromatic tetracarboxylic dianhydride may be a biomass-derived compound of which at least a part of the raw materials thereof are derived from biomass. In other words, the thermoplastic polyimide containing a structural unit represented by Formula (1) in the disclosure may be a biomass-derived thermoplastic polyimide.

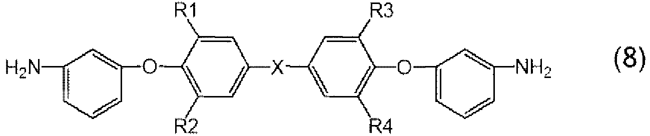

In Formula (8), the definitions of X and R1 to R4 are the same as the definitions of X and R1 to R4 in Formula (1).

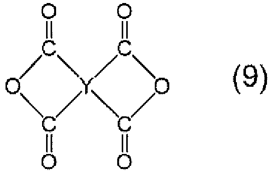

In Formula (9), the definition of Y is the same as the definition of Y in Formula (1). In a case in which Y is Formula (2-1) that does not have a substituent on the aromatic ring, the aromatic tetracarboxylic dianhydride of Formula (9) is represented by Formula (11) shown below, and Formula (11) is pyromellitic dianhydride.

More specifically, the thermoplastic polyimide containing a structural unit represented by Formula (1) can be synthesized by the following method. The thermoplastic polyimide composed of structural units represented by Formula (3) is obtained by dehydration and co-condensation of a diamine (4,4'-bis(3-aminophenoxy)biphenyl (m-BP)) represented by the following Formula (10) and a tetracarboxylic dianhydride (pyromellitic dianhydride (PMDA)) represented by the following Formula (11).

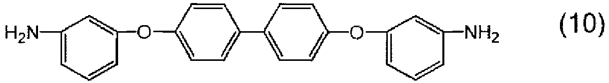

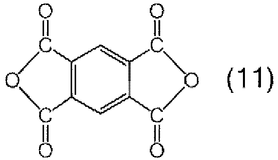

A known imidization reaction can be applied to the method of synthesizing the thermoplastic polyimide containing a structural unit represented by Formula (1).

The amount of use of the raw material compound is usually from 0.90 equivalents to 0.99 equivalents of tetracarboxylic dianhydride with respect to 1 equivalent of diamine. The amount of use of the raw material compound is preferably from 0.93 equivalents to 0.985 equivalents, more preferably from 0.95 equivalents to 0.98 equivalents. In a case in which the amount of use of the raw material compound is from 0.90 equivalents to 0.99 equivalents, the molecular weight of the thermoplastic polyimide is sufficiently high, and the thermoplastic polyimide has excellent fluidity, whereby a smoother film is easily formed and the film formed also has more improved mechanical strength.

The synthesis of the thermoplastic polyimide, preferably includes blocking reactive terminals of a molecule are with phthalic anhydride or the like. Blocking of reaction terminal remarkably improves the heat stability of the thermoplastic polyimide resin.

The reaction is particularly preferably performed in an organic solvent. Examples of the organic solvent include N,N-dimethylformamide, N,N-diethylacetamide, N,N-dimethoxyacetamide, N-methyl-2-pyrrolidone, 1,3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyrroline, picoline, dimethylsulfoxide, dimethyl sulfone, tetramethylurea hexamethylphosphoramide, phenol, o-cresol, m-cresol, p-cresol, p-chlorophenol, anisole, benzene, toluene, and xylene. The organic solvent may be used singly, or in mixture of two or more kinds thereof.

The reaction temperature is usually from room temperature (for example, 25°C) to 250°C, preferably from 140°C to 200°C. The reaction pressure is not particularly limited, and the reaction can be sufficiently carried out at ordinary pressure. The reaction time, although it varies with the type of the solvent and the reaction temperature, is usually preferably from 4 hours to 24 hours. In regard to the method of imidization, a desired thermoplastic polyimide is obtained by either imidization by heating the polyamide acid as a precursor at 100°C to 300°C or chemical imidization using an imidization agent such as acetic anhydride.

### {Commercially Available Product}

A commercially available product may be used as the thermoplastic polyimide containing a structural unit represented by Formula (1). Examples of the commercially available product of the thermoplastic polyimide containing a structural unit represented by Formula (1) include AURUM (registered trademark) PD400, PD450, PD500A, and PD500M (all are manufactured by Mitsui Chemicals Inc.).

### (Additive)

The particles included in the powder in the disclosure may include a component (namely, additive) other than the thermoplastic polyimide containing a structural unit represented by Formula (1). The additive is not particularly limited, and may be, for example, at least one selected from the group consisting of a carbon fiber, a glass fiber, a potassium titanate fiber, an aluminum borate fiber, a metal fiber, a ceramic fiber, a boron fiber, a silicon carbide fiber, an asbestos fiber, a rock wool fiber, and an aramid fiber.

The additive may include, if necessary, at least one of mica, synthetic mica, wollastonite, talc, silicone oil, fluorine-based oil, glass beads, molybdenum disulfide, clay, silica, alumina, diatomite, soil, aluminum hydrate, Shirasu balloon, a carbon nanotube, calcium carbonate, hydrotalcite, fluorine, a filler such as graphite (for example, artificial graphite or natural graphite (for example, flake graphite, vein graphite, or earthy graphite)), metal particles (for example, metal or an alloy), pigment-based particles (for example, an inorganic pigment or an organic pigment), a lubricant, a release agent, a stabilizer, a colorant, a crystal nucleator, an ultraviolet absorber, an infrared reflection agent, an infrared absorber, or an anti-reflection agent, as long as characteristics of the thermoplastic polyimide are not impaired.

The additive may include, if necessary, at least one of various crystal polymers, thermoplastic resins (for example, fluororesin, polyether imide, polyether nitrile, polyether ketone, polyether ether ketone, polyether ketone ketone, polyether ketone ether ketone ketone, polyamideimide, polyether sulfone, polysulfone, polyarylate and/or polyphenylene sulfide), or thermosetting resins (for example, an epoxy resin, a polybenzimidazole resin, and a polyimide resin), as long as characteristics of the thermoplastic polyimide are not impaired.

In a case in which the particles included in the powder in the disclosure include additives, the content of the additives and the content of the thermoplastic polyimide are not particularly limited, and are appropriately selected in accordance with the type or the like of the additives.

The content ratio of the thermoplastic polyimide containing a structural unit represented by Formula (1) in the particles included in the powder in the disclosure is preferably from 50% by mass to 100% by mass, more preferably from 60% by mass to 100% by mass, still more preferably from 70% by mass to 100% by mass, further preferably from 80% by mass to 100% by mass, and still further preferably from 90% by mass to 100% by mass, from the viewpoint of providing more improved electrical characteristics and heat resistance. In other words, the content ratio of the additives in the particles included in the powder in the disclosure is preferably from 0% by mass to 50% by mass, more preferably from 0% by mass to 40% by mass, still more preferably from 0% by mass to 30% by mass, further preferably from 0% by mass to 20% by mass, and still further preferably from 0% by mass (namely, the additive is not contained) to 10% by mass, from the viewpoint of providing more improved electrical characteristics and heat resistance.

### (Particle Size of Powder)

The powder in the disclosure preferably satisfies at least one of a particle size d50, at which the cumulative volume-based particle size distribution is 50%, is from 5 µm to 100 µm, or a particle size d90, at which the cumulative volume-based particle size distribution is 90%, is from 10 µm to 200 µm, in the method of producing a conductive member of the disclosure. Making the particle size of the powder uniform enables a conductive member having a uniform thickness and high surface smoothness to be easily produced. The powder in the disclosure more preferably satisfies both of the condition that a particle size d50, at which the cumulative volume-based particle size distribution is 50%, is from 5 µm to 100 µm, and a particle size d90, at which the cumulative volume-based particle size distribution is 90%, is from 10 µm to 200 µm, from the viewpoint of producing a conductive member having a uniform thickness and high surface smoothness.

In the disclosure, a particle size at which the accumulation in a particle size distribution on a volume basis reaches a given percentage (%) is measured by a laser light diffraction/scattering method (wet method). More specifically, the powder and distilled water (FUJIFILM Wako Pure Chemical Corporation, refractive index 1.33) are mixed, and dispersed at an output of 25 W for 2 minutes with an ultrasonic homogenizer built in an apparatus. Measurement is performed with a laser light diffraction/scattering type particle size analizer (MicrotracBEL Corp., Model: Microtrac MT3300EXII) in the following particle conditions.
Transmittivity: transmission, refractive index: 1.81, shape: non-spherical shape

The particle size d50, at which the cumulative volume-based particle size distribution is 50%, is more preferably from 5 µm to 100 µm, still more preferably from 10 µm to 70 µm, and particularly preferably from 20 µm to 40 µm.

The particle size d90, at which the cumulative volume-based particle size distribution is 90%, is more preferably from 10 µm to 200 µm, still more preferably from 25 µm to 150 µm, and particularly preferably from 40 µm to 100 µm.

### (Particle Shape of Powder)

Examples of the particle shape of the powder include spherical, elliptical, needle-shaped, plate-shaped, rod-shaped, conical, cylindrical, cubic, rectangular solid, diamond-shaped, star-shaped, and irregular shapes. The particles of the powder may be solid particles, hollow particles, or perforated particles such as porous particles.

### (Thermoplastic Polyimide and Additive in Powder)

In the disclosure, the powder including the thermoplastic polyimide containing a structural unit represented by Formula (1) may be a powder in which the thermoplastic polyimide containing a structural unit represented by Formula (1) and an additive are included in the same particle. Alternatively, the powder including the thermoplastic polyimide containing a structural unit represented by Formula (1) may be a mixed powder in which a powder of the thermoplastic polyimide containing a structural unit represented by Formula (1) and a powder of the additive are mixed.

### [Metal Member]

### (Material)

The material of the metal member is not particularly limited. The material of the metal member is preferably a metal that is any one of gold, a gold alloy, silver, a silver alloy, copper, a copper alloy, iron, an iron alloy containing steel, aluminum, an aluminum alloy, tungsten, or a tungsten alloy. The material of the metal member is more preferably a metal that is any one of copper, a copper alloy, iron, an iron alloy containing steel, aluminum, or an aluminum alloy, still more preferably a metal that is any one of copper, a copper alloy, aluminum, or an aluminum alloy, and particularly preferably copper or a copper alloy, from the viewpoint of having excellent conductivity and from the viewpoint of productivity.

Upon heating of the metal member to about 400°C or more in the air, an oxidized film is easily formed in case where the material of the metal member is copper, a copper alloy, aluminum, or an aluminum alloy. However, the oxidized film formed with copper, a copper alloy, aluminum, or an aluminum alloy has lower affinity to the thermoplastic polyimide containing a structural unit represented by Formula (1). Therefore, in a case where an insulating film is formed after heating of the metal member to about 400°C or more as in a fluidized immersion method, such as in a conventional method, the insulating film would be formed on the above oxidized film, thereby causing deterioration in the tightness of contact between the metal member and the insulating film.

In this regard, an electrostatic coating method as in the method of producing a conductive member of the disclosure includes covering a surface of the metal member which is in the state of being almost free from an oxidized film, with the powder of the thermoplastic polyimide containing a structural unit represented by Formula (1), and then heating the resultant so as to form an insulating film. Accordingly, even in a case in which the material of the metal member is copper, a copper alloy, aluminum, or an aluminum alloy, an oxidized film is hardly formed, and sufficiently high tightness of contact between the insulating film and the metal member can be achieved.

Examples of the gold alloy include an alloy containing 40% by mass or more of gold, an alloy containing 80% by mass or more of gold, and an alloy containing 99% by mass or more of gold. Examples of the silver alloy include an alloy containing 40% by mass or more of silver, an alloy containing 80% by mass or more of silver, and 99% by mass or more of silver. Examples of the copper alloy include an alloy containing 40% by mass or more of copper, an alloy containing 80% by mass or more of copper, and an alloy containing 99% by mass or more of copper. Specific examples of the copper alloy include beryllium/copper, titanium/copper, phosphor bronze, a Corson alloy, red brass, brass, cupronickel, bronze, and nickel silver. Examples of the iron alloy include an alloy containing 40% by mass or more of iron, an alloy containing 80% by mass or more of iron, and an alloy containing 99% by mass or more of iron. Specific examples of the iron alloy include stainless steel, soft steel, carbon steel, an iron/nickel alloy, and steel. Examples of the aluminum alloy include an alloy containing 40% by mass or more of aluminum, an alloy containing 80% by mass or more of aluminum, and an alloy containing 99% by mass or more of aluminum. Examples of the tungsten alloy include an alloy containing 40% by mass or more of tungsten, an alloy containing 80% by mass or more of tungsten, and an alloy containing 99% by mass or more of tungsten.

The lower limit of the purity of the metal in the metal member is not particularly limited, and the purity of any metal of gold, silver, copper, iron, aluminum, or tungsten is preferably 50.00% by mass or more, more preferably 60.00% by mass or more, still more preferably 70.00% by mass or more, particularly preferably 80.00% by mass or more, further preferably 90.00% by mass or more, still further preferably 95.00% by mass or more, even further preferably 98.00% by mass or more, particularly further preferably 99.00% by mass or more, yet further preferably 99.50% by mass or more, remarkably preferably 99.90% by mass or more, and most preferably 99.95% by mass or more. The upper limit of the purity of the metal in the metal member is not particularly limited, and may be 100.00% by mass.

The copper is preferably pure copper (namely, having a copper purity of 99.90% by mass or more) from the viewpoint of use as a conductive member. Examples of the pure copper include oxygen-free copper (having a copper purity of 99.96% by mass or more), low-oxygen copper, tough pitch copper (having a copper purity of 99.90% by mass or more), and phosphorus deoxidized copper (having a copper purity of 99.90% by mass or more). The oxygen content in the low-oxygen copper is 30 ppm or less, preferably 20 ppm or less. The copper is more preferably oxygen-free copper from the viewpoint that it has excellent conductivity.

### (Surface Treatment)

The metal member in the disclosure may have been surface-treated from the viewpoint of improving adhesiveness with the film. The method of the surface treatment is not particularly limited, and examples include roughening treatment, puff polishing, UV ozone treatment, excimer treatment, alkali treatment, treatment with a silane coupling agent, and any combination thereof. The surface treatment is preferably roughening treatment from the viewpoint of improving contact tightness between the metal member and the film. Examples of the roughening treatment include dry roughening treatment or wet roughening treatment. Examples of the dry roughening treatment include corona discharge treatment, plasma treatment, blast treatment (for example, sand-blast treatment, blower-blast treatment, or shot-blast treatment), scrub polishing, and rolling treatment with an emboss roll. Examples of the wet roughening treatment include etching treatment.

The arithmetic average roughness Ra of the surface of the metal member in the disclosure is preferably from 0.01 µm to 100 µm, more preferably from 0.05 µm to 50 µm, and still more preferably from 0.1 µm to 30 µm. In the disclosure, the arithmetic average roughness Ra of the surface can be measured with a surface roughness meter (Mitutoyo Corporation, SURFTEST SV-3200) according to JIS B 0601-1994 (ISO 4287:1997).

### (Shape)

The shape of the metal member is not particularly limited, and may be, for example, a plate-like, rod-like, coil-like, ring-like, L-shaped, U-shaped, or T-shaped. The size of the metal member is not particularly limited, and may be appropriately set in accordance with the intended use or the like.

### [Electrostatic Coating]

### (Apparatus)

The electrostatic coating apparatus used for electrostatic coating can be a known electrostatic coating apparatus. Examples of the electrostatic coating apparatus include an electrostatic spray gun such as ENCORE XT manufactured by Nordson.

The method of charging the powder may be a triboelectric charging method or a corona charging method. The triboelectric charging method is a method including subjecting the powder to triboelectric charging treatment and blowing the resultant. The corona charging method is a method including subjecting the powder to corona discharge treatment and blowing the resultant.

### (Voltage)

The voltage applied for electrostatic coating is preferably from 10 kV to 300 kV, more preferably from 20 kV to 200 kV, more preferably from 30 kV to 100 kV, and more preferably from 50 kV to 70 kV. As a result of the application of voltage to the powder, the powder is charged, attachment efficiency thereof to the metal member is increased, and the thickness of the attached powder material becomes uniform.

### (Number of Electrostatic Coatings Carried out)

The number of electrostatic coatings of the metal member carried out in the method of producing a conductive member of the disclosure is not particularly limited. In order to, for example, obtain a film having a desired thickness, electrostatic coating on the metal menber may be carried out from one to ten times, from one to five times, from one to three times, from one to two times, or only once. In a case in which electrostatic coating is carried out multiple times, it is preferable to carry out heating (namely, annealing) described below after each electrostatic coating.

### (Thickness of Powder Material)

The thickness of the powder material (powder layer) to be attached to the metal member is preferably from 1 µm to 1500 µm, more preferably from 5 µm to 1000 µm, still more preferably from 5 µm to 500 µm, further preferably from 10 µm to 300 µm, and still further preferably from 20 µm to 200 µm. The thickness of the powder material attached to the metal member was determined by measuring the thicknesses before and after attachment, specifically measuring and averaging the thicknesses at three different points.

### [Formation of Insulating Film]

The method of producing a conductive member of the disclosure includes heating (namely, annealing) the attached powder so as to melt the powder, thereby forming an insulating film. Heating of the attached powder may be performed by heating the whole of the metal member to which the powder is attached.

### (Heating)

The conditions of heating of the attached powder are not particularly limited, as long as an IR spectrum of the insulating film satisfies at least one of a ratio I₁₄₈₇/I₁₇₇₈ of the absorption intensity I₁₄₈₇ at 1487 cm⁻¹ to the absorption intensity I₁₇₇₈ at 1778 cm⁻¹ being from 3.0 to 5.0, or a ratio I₁₂₃₂/I₁₇₇₈ of the absorption intensity I₁₂₃₂ at 1232 cm⁻¹ to the absorption intensity I₁₇₇₈ at 1778 cm⁻¹ being from 3.0 to 5.0. By adjusting at least one of the temperature of the heating or the time of the heating as heating conditions, the above ratio (I₁₄₈₇/I₁₇₇₈ or I₁₂₃₂/I₁₇₇₈) can be set within a desired numerical value range.

The temperature of heating of the attached powder is preferably from 390°C to 430°C, more preferably from 392°C to 420°C, still more preferably from 393°C to 410°C, and particularly preferably from 395°C to 405°C, from the viewpoint of enabling reduction in dielectric breakdown voltage to be mitigated.

The time of heating of the attached powder is preferably from more than 0 minutes to 30 minutes, more preferably from 1 minute to 20 minutes, still more preferably from 2 minutes to 15 minutes, particularly preferably from 3 minutes to 10 minutes, from the viewpoint of enabling reduction in dielectric breakdown voltage to be mitigated.

### -Melting-

After attachment of the powder to a surface of the metal member by the electrostatic coating method, a powder layer including the powder is formed on a surface of the metal member. The particles included in the powder, which contain the thermoplastic polyimide containing a structural unit represented by Formula (1), are melted by the above heating and adjacent particles are fused together. Thus, the powder layer is smoothed, thereby forming an insulating film on a surface of the metal member. When the heating is performed, the powder containing the thermoplastic polyimide containing a structural unit represented by Formula (1) melts.

### (Number of Heating Treatments Performed)

In a case in which electrostatic coating of the metal member is performed multiple times in the method of producing a conductive member of the disclosure, one heating is preferably conducted after each electrostatic coating, as described above. In other words, in a case in which electrostatic coating of the metal member is performed multiple times, electrostatic coating and heating are preferably alternately repeated.

The thermoplastic polyimide containing a structural unit represented by Formula (1) is more easily decomposed by heating at a higher temperature and/or for a longer time. Therefore, when heating of the metal member is performed multiple times, each heating is preferably within the above preferred temperature range of heating, each heating is preferably within the above preferred time range of heating, and, furthermore, the total time of the multiple heating is more preferably within the above preferred time range of heating.

### (Insulating Film)

### -Thickness of Insulating Film-

The thickness of the insulating film is preferably from 1 µm to 1500 µm, more preferably from 5 µm to 1000 µm, still more preferably from 5 µm to 500 µm, further preferably from 10 µm to 300 µm, and still further preferably from 20 µm to 200 µm.

The thickness of the insulating film was determined by measuring the thicknesses before and after the attachment, specifically measuring and averaging the thicknesses at three different points. The thicknesses after powder attachment were determined by measuring the thickness of the metal member after heating.

### -Arithmetic Average Roughness of Surface of Insulating Film-

The arithmetic average roughness Ra of the surface of the insulating film is preferably from 0.1 µm to 100 µm, more preferably from 0.3 µm to 50 µm, and still more preferably from 0.5 µm to 30 µm. The arithmetic average roughness Ra of the surface can be measured with a surface roughness meter (Mitutoyo Corporation, SURFTEST SV-3200) according to JISB0601-1994 (ISO 4287:1997). In order to enable the surface of the insulating film to satisfy the range of the arithmetic average roughness Ra, the attached powder is preferably heated to smoothen the powder layer.

### -IR Spectrum of Insulating Film-

The IR spectrum in the disclosure can be measured by a microscopic transmission method with an infrared spectrophotometer.

The IR spectrum of the insulating film preferably satisfies at least one of a ratio I₁₄₈₇/I₁₇₇₈ of the absorption intensity I₁₄₈₇ at 1487 cm⁻¹ to the absorption intensity I₁₇₇₈ at 1778 cm⁻¹ being from 3.0 to 5.0, or a ratio I₁₂₃₂/I₁₇₇₈ of the absorption intensity I₁₂₃₂ at 1232 cm⁻¹ to the absorption intensity I₁₇₇₈ at 1778 cm⁻¹ being from 3.0 to 5.0, from the viewpoint of enabling reduction in dielectric breakdown voltage to be mitigated. The IR spectrum of the insulating film more preferably satisfies both of a ratio I₁₄₈₇/I₁₇₇₈ of the absorption intensity I₁₄₈₇ at 1487 cm⁻¹ to the absorption intensity I₁₇₇₈ at 1778 cm⁻¹ being from 3.0 to 5.0, and a ratio I₁₂₃₂/I₁₇₇₈ of the absorption intensity I₁₂₃₂ at 1232 cm⁻¹ to the absorption intensity I₁₇₇₈ at 1778 cm⁻¹ being from 3.0 to 5.0, from the viewpoint of enabling reduction in dielectric breakdown voltage to be mitigated.

In a case in which both of the ratio I₁₄₈₇/I₁₇₇₈ and the ratio I₁₂₃₂/I₁₇₇₈ are less than 3.0, it can be said that an ether bond is remarkably cleaved and an aromatic ring is remarkably decomposed in the thermoplastic polyimide containing a structural unit represented by Formula (1), and the value of the dielectric breakdown voltage falls to less than 50 kV/mm and electrical characteristics degrade. In contrast, in a case in which at least one of the ratio I₁₄₈₇/I₁₇₇₈ or the ratio I₁₂₃₂/I₁₇₇₈ is 3.0 or more, the chemical structure of the thermoplastic polyimide containing a structural unit represented by Formula (1) is maintained to a certain degree and the dielectric breakdown voltage is 50 kV/mm or more, and it can be said that electrical characteristics are favorable.

The chemical structure of the thermoplastic polyimide containing a structural unit represented by Formula (1) before heating has a value of I₁₄₈₇/I₁₇₇₈ of 5.0, and a value of I₁₂₃₂/I₁₇₇₈ of 5.0. These values are derived from the abundance ratio of imide groups, aromatic ring-derived carbon-carbon double bonds (C=C), and ether bonds in the chemical structure of the thermoplastic polyimide containing a structural unit represented by Formula (1) before heating.

The ratio I₁₄₈₇/I₁₇₇₈ is more preferably from 3.1 to 5.0, still more preferably from 3.1 to 4.5, and particularly more preferably from 3.2 to 4.0. The ratio I₁₂₃₂/I₁₇₇₈ is more preferably from 3.1 to 5.0, still more preferably from 3.1 to 4.5, and particularly preferably from 3.1 to 4.0.

### -Cross Cut Test of Insulating Film-

Where a cross cut test is performed according to ISO 2409:1992 (JIS K5600-5-6), the proportion of the number of cells with no peeling of the insulating film from the metal member is preferably 80% or more, more preferably 90% or more, and still more preferably 95% or more, with respect to the total number of cells. The proportion of the number of cells with no peeling of the insulating film from the metal member is, for example, 100% or less with respect to the total number of cells.

The details of the cross cut test are as follows. More specifically, the insulating film placed on a flat region on the metal member is cut at a width of 1 mm in a mesh pattern to form 25 cells (squares). An adhesive tape (cellophane tape manufactured by NICHIBAN Co., Ltd.) is applied to the region of the insulating film, on which the cells are formed, and then the adhesive tape is rapidly pulled at an angle of approximately 60 degrees for peeling. Then, the cells after peeling of the adhesive tape are observed, and the proportion (%) of the number of cells in which the insulating film remains unpeeled from the metal member, with respect to the total number of cells (25), is calculated.

### <<Conductive Member>>

The conductive member of the disclosure includes a metal member and an insulating film covering at least a part of a surface of the metal member,
wherein the insulating film includes a thermoplastic polyimide containing a structural unit represented by the following Formula (1), and an IR spectrum thereof satisfies at least one of a ratio I₁₄₈₇/I₁₇₇₈ of the absorption intensity I₁₄₈₇ at 1487 cm⁻¹ to the absorption intensity I₁₇₇₈ at 1778 cm⁻¹ being from 3.0 to 5.0, or a ratio I₁₂₃₂/I₁₇₇₈ of the absorption intensity I₁₂₃₂ at 1232 cm⁻¹ to the absorption intensity I₁₇₇₈ at 1778 cm⁻¹ being from 3.0 to 5.0.

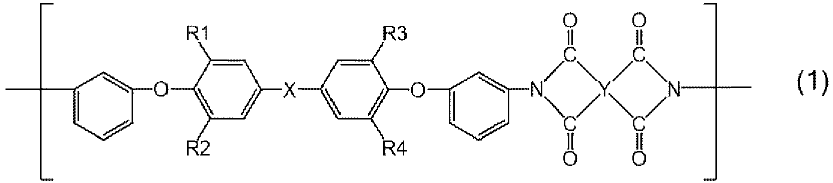

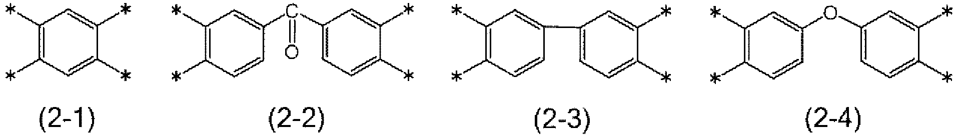

In Formula (1), X is a direct bond, -SO₂-, -CO-, -C(CH₃)₂-, -C(CF₃)₂-, or -S-. Each of R1, R2, R3, and R4 is independently a hydrogen atom, an alkyl group, an alkoxy group, an alkyl halide group, an alkoxy halide group, or a halogen atom.

In Formula (1), Y is a group represented by any of Formula (2-1) to Formula (2-4). In Formula (2-1) to Formula (2-4), * represents a bond, and the aromatic rings optionally have a substituent.

The definition, examples, and preferred aspects of Formula (1) in the conductive member of the disclosure are respectively the same as the definition, examples, and preferred aspects of Formula (1) in the method of producing a conductive member of the disclosure described above. The definition, examples, and preferred aspects of the conductive member in the conductive member of the disclosure are also respectively the same as the definition, examples, and preferred aspects of the conductive member in the method of producing a conductive member of the disclosure described above.

The insulating film in the conductive member of the disclosure covers at least a part of a surface of the metal member. The insulating film more preferably covers 50% or more of the surface area of the metal member, still more preferably covers 70% or more of the surface area of the metal member, further preferably covers 90% or more of the surface area of the metal member, and still further preferably covers the entire surface.

### EXAMPLES

Hereinafter, the disclosure is still more specifically described with reference to Examples, but the disclosure is not limited to the following Examples as far as the gist of the present disclosure is retained.

### <Synthesis of Thermoplastic Polyimide>

A thermoplastic polyimide was synthesized according to the following procedure.

The chemical formula of 4,4'-bis(3-aminophenoxy)biphenyl (m-BP) is as shown in Formula (10).

The chemical formula of pyromellitic dianhydride (PMDA) is as shown in Formula (11).

4,4'-Oxydianiline (ODA) is as shown in the following Formula (12).

The chemical formula of biphenyltetracarboxylic dianhydride (BPDA) is as shown in the following Formula (13).

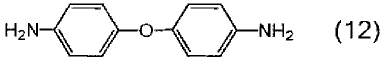

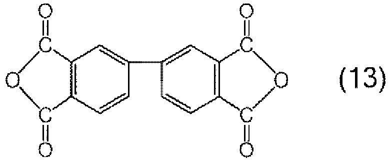

### [Synthesis (1) of Thermoplastic Polyimide Composed of Structural Units Represented by Formula (3)]

A container equipped with a stirrer, a reflux condenser, a water separator, and a nitrogen introduction tube was prepared. This container was loaded with 3.680 kg (10 mol) of 4,4'-bis(3-aminophenoxy)biphenyl, 2.071 kg (9.5 mol) of pyromellitic dianhydride, 0.148 kg (1.0 mol) of phthalic anhydride, and 21.53 kg of m-cresol. Thereafter, the temperature was raised to 200°C by warming with stirring under a nitrogen atmosphere. It was confirmed that about 350 ml of water was removed by distillation during this process. The reaction was further performed at 200°C for 6 hours. Thereafter, cooling to room temperature was performed, and 10.8 kg of toluene was added. Thereafter, separation by filtration was performed to obtain a yellow polyimide powder. The polyimide powder was washed with toluene and then dried at 180°C for 24 hours, thereby obtaining 5.46 kg (yield 98.5% by mass) of a polyimide powder. Furthermore, the polyimide powder was sieved with a mesh sieve having an opening size of 90 µm, and subjected to drying treatment at 200°C for 8 hours, thereby obtaining a polyimide powder (a thermoplastic polyimide composed of structural units represented by Formula (3), hereinafter also referred to as "PI-1").

Properties and the like (number average molecular weight, melt index, glass transition temperature Tg, melting point, and particle size) of the resulting PI-1 are shown in Table 1. The measurement method for each of these properties is as described above.

### [Synthesis (2) of Thermoplastic Polyimide Composed of Structural Units Represented by Formula (3)]

A container equipped with a stirrer, a reflux condenser, a water separator, and a nitrogen introduction tube was prepared. This container was loaded with 2.873 kg (7.8 mol) of 4,4'-bis(3-aminophenoxy)biphenyl, 1.570 kg (7.25 mol) of pyromellitic dianhydride, 0.148 kg (1.0 mol) of phthalic anhydride, and 21.53 kg of m-cresol. Thereafter, the temperature was raised to 200°C by warming with stirring under a nitrogen atmosphere. It was confirmed that about 350 ml of water was removed by distillation during this process. The reaction was further performed at 200°C for 6 hours. Thereafter, cooling to room temperature was performed, and 10.8 kg of toluene was added. Thereafter, separation by filtration was performed to obtain a yellow polyimide powder. The polyimide powder was washed with toluene and then dried at 180°C for 24 hours, thereby obtaining 5.46 kg (yield 98.5% by mass) of polyimide powder. Furthermore, the polyimide powder was sieved with a mesh sieve having an opening size of 90 µm, and subjected to drying treatment at 200°C for 8 hours, thereby obtaining a polyimide powder (a thermoplastic polyimide composed of structural units represented by Formula (3), hereinafter also referred to as "PI-2").

Properties and the like (number average molecular weight, melt index, glass transition temperature Tg, melting point, and particle size) of the resulting PI-2 are shown in Table 1.

### [Synthesis of Thermoplastic Polyimide Composed of Structural Units Represented by Formula (4) and Formula (5)]

A container equipped with a stirrer, a reflux condenser, a water separator, and a nitrogen introduction tube was prepared, and this container was loaded with 3.312 kg (9.0 mol) of 4,4'-bis(3-aminophenoxy)biphenyl, 0.2 kg (1.0 mol) of 4,4'-oxydianiline, 2.071 kg (9.5 mol) of pyromellitic dianhydride, 0.148 kg (1.0 mol) of phthalic anhydride, and 21.53 kg of m-cresol. Thereafter, the temperature was raised to 200°C by warming with stirring under a nitrogen atmosphere. It was confirmed that about 350 ml of water was removed by distillation during this process. The reaction was further performed at 200°C for 6 hours. Thereafter, cooling to room temperature was performed, and 10.8 kg of methanol was added. Thereafter, separation by filtration was performed to obtain a yellow polyimide powder. The polyimide powder was washed with methanol and then dried at 180°C for 24 hours, thereby obtaining 5.26 kg (yield 98% by mass) of a polyimide powder. Furthermore, the polyimide powder was sieved with a mesh sieve having an opening size of 90 µm, and subjected to drying treatment at 200°C for 8 hours, thereby obtaining a polyimide powder (a thermoplastic polyimide composed of structural units represented by Formula (4) and Formula (5) (m/n=9/1), hereinafter also referred to as "PI-3").

Properties and the like (number average molecular weight, melt index, glass transition temperature Tg, melting point, and particle size) of the resulting PI-3 are shown in Table 1.

### [Synthesis of Thermoplastic Polyimide Composed of Structural Units Represented by Formula (6) and Formula (7)]

A container equipped with a stirrer, a reflux condenser, a water separator, and a nitrogen introduction tube was prepared. This container was loaded with 3.684 kg (10.0 mol) of 4,4'-bis(3-aminophenoxy)biphenyl, 1.081 kg (4.96 mol) of pyromellitic dianhydride, 1.459 kg (4.86 mol) of biphenyltetracarboxylic dianhydride, 0.148 kg (1.0 mol) of phthalic anhydride, and 21.53 kg of m-cresol. Thereafter, the temperature was raised to 200°C by warming with stirring under a nitrogen atmosphere. It was confirmed that about 350 ml of water removed by distillation during this process. The reaction was further performed at 200°C for 6 hours. Thereafter, cooling to room temperature was performed, and 10.8 kg of methanol was added. Thereafter, separation by filtration was performed to obtain a yellow polyimide powder. The polyimide powder was washed with methanol and then dried at 180°C for 24 hours, thereby obtaining 5.46 kg (yield 98.5% by mass) of a polyimide powder. Furthermore, the polyimide powder was sieved with a mesh sieve having an opening size of 90 µm, and subjected to drying treatment at 200°C for 8 hours, thereby obtaining a polyimide powder (a thermoplastic polyimide composed of structural units represented by Formula (6) and Formula (7) (p/q=1/1), hereinafter "PI-4").

Properties and the like (number average molecular weight, melt index, glass transition temperature Tg, melting point, and particle size) of the resulting PI-4 are shown in Table 1.

**[Table 1]**

| | | | Thermoplastic polyimide | | | |
|---|---|---|---|---|---|---|
| Evaluation items | | Unit | PI-1 | PI-2 | PI-3 | PI-4 |
| Number average molecular weight | | - | 15900 | 12700 | 17300 | 22300 |
| Melt index | | g/10 min | 8 | 16 | 5 | 6 |
| Glass transition temperature Tg | | °C | 245 | 240 | 253 | 235 |
| Melting point | | °C | 388 | 386 | - | - |
| Particle size | d50 | µm | 25.4 | 28.5 | 29.6 | 36.0 |
| | d90 | µm | 50.4 | 54.6 | 56.7 | 75.3 |

### <Metal Member>

An oxygen-free copper plate (100 mm × 200 mm × 1 mm, C1020) was prepared as a metal member. The arithmetic average roughness Ra of a surface of a metal member was 0.1 µm.

### <Production of Conductive Member>

### [Example 1]

The metal member was electrostatically coated with a powder of the thermoplastic polyimide PI-1 at a voltage of 60 kV with an electrostatic coating apparatus (ENCORE XT, manufactured by Nordson Corporation), thereby attaching the powder to the metal member. Subsequently, the metal member to which the powder was attached was heated (annealed) with a standard electric furnace (FO810, manufactured by Yamato Scientific Co., Ltd.) at 400°C for 7 minutes. Furthermore, electrostatic coating was performed in the same manner, and heating was performed at 400°C for 4 minutes. Furthermore, electrostatic coating was performed in the same manner, and heating was performed at 400°C for 3 minutes, thereby obtaining an insulating film. In other words, electrostatic coating and heating were repeatedly performed for a total of three times. The attachment of the powder to the metal member was such the thickness of the resultant insulating film would be 0.2 mm. The arithmetic average roughness Ra of the surface of the insulating film was 0.5 µm.

### [Example 2]

The metal member was electrostatically coated with a powder of the thermoplastic polyimide PI-2 at a voltage of 60 kV with an electrostatic coating apparatus (ENCORE XT, manufactured by Nordson Corporation), thereby attaching the powder to the metal member. The attachment of the powder to the metal member was such that the thickness of the resultant insulating film would be 0.05 mm. Subsequently, the metal member to which the powder was attached was heated with a STANDARD ELECTRIC FURNACE (FO810, manufactured by Yamato Scientific Co., Ltd.) at 400°C for 2.5 minutes, thereby obtaining the insulating film.

### [Example 3]

The metal member was electrostatically coated with a powder of the thermoplastic polyimide PI-1 at a voltage of 60 kV with an electrostatic coating apparatus (ENCORE XT, manufactured by Nordson Corporation), thereby attaching the powder to the metal member. The attachment of the powder to the metal member was such that the thickness of the resultant insulating film would be 0.03 mm. Subsequently, the metal member to which the powder was attached was heated with a STANDARD ELECTRIC FURNACE (FO810, manufactured by Yamato Scientific Co., Ltd.) at 400°C for 3 minutes, thereby obtaining the insulating film.

### [Example 4]

The metal member was electrostatically coated with a powder of the thermoplastic polyimide PI-1 at a voltage of 60 kV with an electrostatic coating apparatus (ENCORE XT, manufactured by Nordson Corporation), thereby attaching the powder to the metal member. The attachment of the powder was attached to the metal member was such that the thickness of the resultant insulating film would be 0.05 mm. Subsequently, the metal member to which the powder was attached was heated with a STANDARD ELECTRIC FURNACE (FO810, manufactured by Yamato Scientific Co., Ltd.) at 400°C for 10 minutes, thereby obtaining the insulating film.

### [Example 5]

An insulating film was obtained in the same manner as in Example 4 except that the attachment of the powder to the metal member was such that the thickness of the resultant insulating film would be 0.2 mm.

### [Example 6]

An insulating film was obtained in the same manner as in Example 4 except that electrostatic coating was performed with a powder of the thermoplastic polyimide PI-3.

### [Example 7]

An insulating film was obtained in the same manner as in Example 4 except that the electrostatic coating was performed with a powder of the thermoplastic polyimide PI-4.

### [Example 8]

An insulating film was obtained in the same manner as in Example 4 except that the heating was performed at 420°C.

### [Example 9]

An insulating film was obtained in the same manner as in Example 8 except that the heating was performed for 20 minutes.

### [Comparative Example 1]

An insulating film was obtained in the same manner as in Example 4 except that the heating was performed at 450°C for 5 minutes.

### [Comparative Example 2]

An insulating film was obtained in the same manner as in Example 4 except that the heating was performed at 450°C for 30 minutes.

### [Comparative Example 3]

An insulating film was obtained in the same manner as in Example 4 except that the heating was performed at 450°C for 60 minutes.

### <Evaluation of Conductive Member>

### [IR Spectrum]

The IR spectrum of the insulating film included in the conductive member was measured with an infrared spectrophotometer (Cary 620/670 manufactured by Agilent Technologies), by a microscopic transmission method. The detailed measurement conditions are as follows.
· Measurement region: from 4000 cm⁻¹ to 600 cm⁻¹
· Resolution: 4 cm⁻¹
· Number of scans: 128

The ratio I₁₄₈₇/I₁₇₇₈ of the absorption intensity at 1487 cm⁻¹ to the absorption intensity at 1778 cm⁻¹, and the ratio I₁₂₃₂/I₁₇₇₈ of the absorption intensity at 1232 cm⁻¹ to the absorption intensity at 1778 cm⁻¹ were calculated from the IR spectrum measured for the insulating film included in each of the conductive members. A peak at 1778 cm⁻¹ is assigned to an imide group, a peak at 1487 cm⁻¹ is assigned to an aromatic ring-derived carbon-carbon double bond (C=C), and a peak at 1232 cm⁻¹ is assigned to an ether bond (-O-).

The results are shown in Table 2.

### [Dielectric Breakdown Voltage]

The dielectric breakdown voltage (Breakdown Voltage; BDV) of the insulating film included in the conductive member was measured with a dielectric breakdown tester by a short-time breakdown method (measurement environment 23°C, 50% RH), according to IEC60243-1. An average value of n = 3, tests is taken as the measurement value.

The dielectric breakdown voltage (kV/mm) per millimeter of the thickness of the insulating film was determined from the dielectric breakdown voltage (kV) measured.

The results are shown in Table 2.

### [Cross Cut Test]

A cross cut test according to ISO 2409:1992 (JIS K5600-5-6) was performed on the insulating film. More specifically, the insulating film placed on a flat region of the metal member was cut at a width of 1 mm in a mesh pattern to form 25 cells. An adhesive tape (cellophane tape manufactured by NICHIBAN Co., Ltd.) was applied to the region of the insulating film, on which the cells were formed, and then the adhesive tape was rapidly pulled at an angle of approximately 60 degrees for peeling. The cells after peeling of the adhesive tape were observed, and the proportion (%) of the number of cells in which the insulating film was not peeled from the metal member, with respect to the total number of cells (25 cells), was calculated.

The results are shown in Table 2.

**[Table 2]**

| Evaluation items | | Unit | Ex. 1 | Ex. 2 | Ex. 3 | Ex. 4 | Ex 5 | Ex. 6 | Ex. 7 | Ex. 8 | Ex. 9 | Comp. Ex. 1 | Comp. Ex. 2 | Comp. Ex. 3 |
|---|---|---|---|---|---|---|---|---|---|---|---|---|---|---|
| | | | PI-1 | PI-2 | PI-1 | PI-1 | PI-1 | PI-3 | PI-4 | PI-1 | PI-1 | PI-1 | PI-1 | PI-1 |
| Thickness of insulating film | | mm | 0.2 | 0.05 | 0.03 | 0.05 | 0.2 | 0.05 | 0.05 | 0.05 | 0.05 | 0.05 | 0.05 | 0.05 |
| Heating conditions | Temperature | °C | 400 | 400 | 400 | 400 | 400 | 400 | 400 | 420 | 420 | 450 | 450 | 450 |
| | Time | min | 7/4/3 | 2.5 | 3 | 10 | 10 | 10 | 10 | 10 | 20 | 5 | 30 | 60 |
| IR spectrum | I₁₄₈₇/I₁₇₇₈ | - | 3.6 | 3.7 | 3.4 | 3.6 | 3.3 | 3.5 | 3.6 | 3.2 | 3.0 | 2.8 | 2.7 | 2.0 |
| | I₁₂₃₂/I₁₇₇₈ | - | 3.3 | 3.6 | 3.3 | 3.1 | 3.1 | 3.4 | 3.4 | 3.2 | 2.9 | 2.6 | 2.5 | 2.0 |
| Cross cut test | | % | 100 | 100 | 100 | 100 | 100 | 100 | 100 | 100 | 1.00 | 100 | 100 | 100 |
| Dielectric breakdown voltage (23°C) | | kV | 14 | 4.2 | 3.5 | 3.5 | 18 | 3.6 | 3.5 | 3 | 2.8 | 1.3 | 1 | 0.5 |
| | | kV/mm | 70 | 84 | 117 | 70 | 90 | 72 | 70 | 60 | 55 | 26 | 20 | 10 |

| | | | | | | | | | | | | | | |
|---|---|---|---|---|---|---|---|---|---|---|---|---|---|---|
| Ex: Example Comp. Ex.: Comparative Example | | | | | | | | | | | | | | |

As shown in Table 2, each of the conductive members obtained in Example 1 to Example 9 exhibited high dielectric breakdown voltage. From the foregoing, using a method of producing a conductive member of the disclosure, a conductive member in which reduction in dielectric breakdown voltage was mitigated was obtained.

The disclosure of Japanese Patent Application No. 2023-219957 filed on December 26, 2023 is herein incorporated by reference in its entirety. All documents, patent applications, and technical standards described in the specification are herein incorporated by reference to the same extent, as if each individual document, patent application, and technical standard were specifically and individually indicated to be incorporated by reference.

## Claims

1. A method of producing a conductive member, the method comprising:
attaching a powder comprising a thermoplastic polyimide comprising a structural unit represented by the following Formula (1), to a surface of a metal member by an electrostatic coating method; and
heating the attached powder, thereby melting the powder to form an insulating film,
wherein an IR spectrum of the insulating film satisfies at least one of a ratio I₁₄₈₇/I₁₇₇₈ of an absorption intensity I₁₄₈₇ at 1487 cm⁻¹ to an absorption intensity I₁₇₇₈ at 1778 cm⁻¹ being from 3.0 to 5.0, or a ratio I₁₂₃₂/I₁₇₇₈ of an absorption intensity I₁₂₃₂ at 1232 cm⁻¹ to the absorption intensity I₁₇₇₈ at 1778 cm⁻¹ being from 3.0 to 5.0: 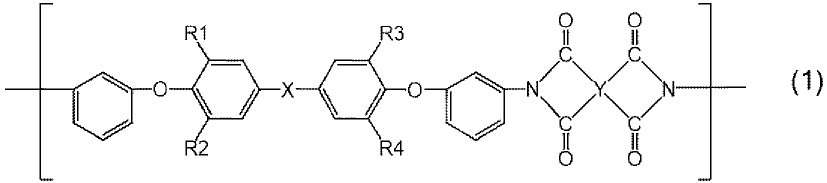 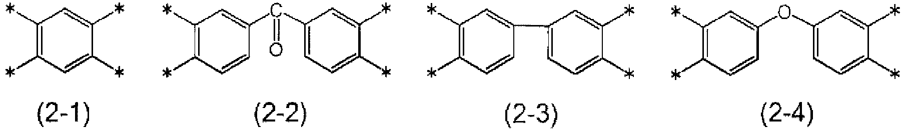
wherein, in Formula (1), X is a direct bond, -SO₂-, -CO-, -C(CH₃)₂-, -C(CF₃)₂-, or -S-; and each of R1, R2, R3, and R4 is independently a hydrogen atom, an alkyl group, an alkoxy group, an alkyl halide group, an alkoxy halide group, or a halogen atom, and
wherein, in Formula (1), Y is a group represented by any one of Formula (2-1) to Formula (2-4); and, in Formula (2-1) to Formula (2-4), * represents a bond, and aromatic rings optionally have a substituent.

2. The method of producing a conductive member according to claim 1, wherein a temperature of the heating is from 390°C to 430°C.

3. The method of producing a conductive member according to claim 1 or 2, wherein a duration of the heating is from more than 0 minutes to 30 minutes.

4. The method of producing a conductive member according to claim 1 or 2, wherein the powder satisfies at least one of a particle size d50, at which a cumulative volume-based particle size distribution is 50%, being from 5 µm to 100 µm, or a particle size d90, at which the cumulative volume-based particle size distribution is 90%, being from 10 µm to 200 µm.

5. The method of producing a conductive member according to claim 1 or 2, wherein a material of the metal member is a metal that is any one of copper, a copper alloy, iron, an iron alloy including steel, aluminum, or an aluminum alloy.

6. The method of producing a conductive member according to claim 1 or 2, wherein the metal member is a surface-treated metal member.

7. The method of producing a conductive member according to claim 1 or 2, wherein a thickness of the insulating film is from 5 µm to 1000 µm.

8. A conductive member, comprising a metal member and an insulating film covering at least a part of a surface of the metal member,
wherein the insulating film comprises a thermoplastic polyimide comprising a structural unit represented by the following Formula (1), and an IR spectrum thereof satisfies at least one of a ratio I₁₄₈₇/I₁₇₇₈ of an absorption intensity I₁₄₈₇ at 1487 cm⁻¹ to an absorption intensity I₁₇₇₈ at 1778 cm⁻¹ being from 3.0 to 5.0, or a ratio I₁₂₃₂/I₁₇₇₈ of an absorption intensity I₁₂₃₂ at 1232 cm⁻¹ to the absorption intensity I₁₇₇₈ at 1778 cm⁻¹ being from 3.0 to 5.0: 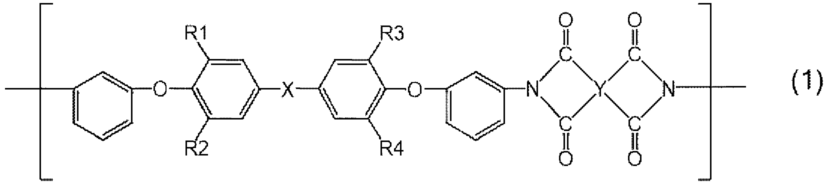 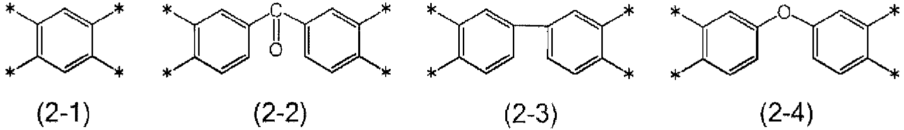
wherein, in Formula (1), X is a direct bond, -SO₂-, -CO-, -C(CH₃)₂-, -C(CF₃)₂-, or -S-; and each of R1, R2, R3, and R4 is independently a hydrogen atom, an alkyl group, an alkoxy group, an alkyl halide group, an alkoxy halide group, or a halogen atom, and
wherein, in Formula (1), Y is a group represented by any one of Formula (2-1) to Formula (2-4), and, in Formula (2-1) to Formula (2-4), * represents a bond, and aromatic rings optionally have a substituent.

9. The conductive member according to claim 8, wherein a material of the metal member is a metal that is any one of copper, a copper alloy, aluminum, or an aluminum alloy.

10. The conductive member according to claim 8, wherein a material of the metal member is copper or a copper alloy.

11. The conductive member according to any one of claims 8 to 10, wherein, in a case in which a cross cut test according to ISO 2409:1992 is performed, a proportion of a number of cells with no peeling of the insulating film from the metal member is 80% or more with respect to a total number of cells.
